# EUROPEAN PATENT SPECIFICATION

(11) **EP 3 242 787 B1**
(45) Date of publication and mention of the grant of the patent: **27.02.2019**
(21) Application number: 16701697.1
(22) Date of filing: 04.01.2016
(51) Int. Cl.: B29C 65/50, B65H 37/02

(54) **BONDING APPARATUS AND BONDING METHOD**
VERBINDUNGSVORRICHTUNG UND VERBINDUNGSVERFAHREN
APPAREIL DE COLLAGE ET PROCÉDÉ ASSOCIÉ

(30) Priority: 05.01.2015 JP 2015000063
(43) Date of publication of application: 15.11.2017
(73) Proprietor: 3M Innovative Properties Company, St. Paul, MN 55133-3427 (US)
(72) Inventor: TOKUNAGA, Taishi, Shinagawa-ku Tokyo 141-8684 (JP); SHIRAI, Takaaki, Shinagawa-ku Tokyo 141-8684 (JP)
(74) Representative: Herzog, Fiesser & Partner Patentanwälte PartG mbB
(86) International application number: PCT/US2016/012036
(87) International publication number: WO 2016/111924

(56) References cited:
- EP-A1- 1 958 524
- EP-A1- 2 404 741
- US-A1- 2003 010 439

## Description

### FIELD OF THE INVENTION

The present invention relates to a bonding apparatus, an article, and a bonding method.

### BACKGROUND

Hemming is a known method of joining inner and outer panels forming automotive parts and the like in the process of assembling the parts. Various methods of joining inner and outer panels are known, and International Patent Publication WO2014/037398discloses a method of manufacturing a bonding section for bonding two panels. The document EP1958524 discloses an apparatus for seamless applying to a bra a casing for housing a bra-cup supporting element.

### SUMMARY OF THE INVENTION

In these machining methods, hot air is blown onto tape placed on an outer edge portion of the inner panel, and the heat of the hot air causes the tape to sag, thereby bonding the tape to the outer edge portion of the inner panel. However, because this method merely involves using hot air to cause tape to sag, the tape is not thoroughly bonded to the outer edge portion of the inner panel, and air penetrates between the tape and the inner panel. The tape not being fully bonded in this way leads to the problem of being incapable of securing sufficient wetting area on the tape (or effective bonding area; in other words, the area over which the tape is actually bonded to the article). When sufficient tape wetting area is not secured, paint may penetrate between the tape and the inner panel during, for example, electropainting, followed by the paint boiling and causing the air in between the tape and the inner panel to swell, thereby producing air bubbles. The production of air bubbles in this way not only negatively affects appearance but also impedes electropainting, thereby potentially creating a variety of unforeseen problems.

The present invention was conceived in order to solve one or more or all of these problems, and an object thereof is to provide a bonding apparatus and bonding method capable of improving the tape wetting area.

A bonding apparatus according to one embodiment of the present invention is provided with: a dispenser part for dispensing tape; a supporting part that supports an article including two opposing surfaces with the tape dispensed by the dispenser part in contact with the article, and bonds the tape to the two surfaces of the article by causing the article and the dispenser part to engage in relative motion; a heat-providing part that provides heat to the tape in contact with the article; and a pressing part that presses the tape against the article.

In accordance with this embodiment, tape dispensed by the dispenser part contacts the article, in which state the article and the dispenser part engage in relative motion, thereby bonding the tape to the two surfaces of the article. The tape is pressed against the article by the pressing part. The tape can thus be thoroughly bonded to the article by the pressing part, thereby allowing for increased tape wetting area. In addition, the pressing of the tape against the article by the pressing part prevents air from penetrating between the tape and the article, thereby suppressing the production of air bubbles by swelling air. Accordingly, it is possible to improve the appearance of the article and avoid the occurrence of various problems caused by the production of air bubbles.

In a bonding apparatus according to another embodiment, the pressing part may be provided at a position near the heat-providing part on a side of the heat-providing part opposite that facing the dispenser part.

In a bonding apparatus according to another embodiment, the pressing part may be slanted with respect to the direction that the article moves with respect to the dispenser part so that force acts upon the tape toward the interior of the article.

In a bonding apparatus according to the invention the pressing part may be further provided with a pressure-controlling part that controls the pressure with which the pressing part presses the tape against the article.

In a bonding apparatus according to another embodiment, the pressing part may be a roller that presses the tape against the article.

An article is assembled using the bonding apparatus described above. The article and the dispenser part engage in relative motion with the tape in contact with the article, thereby bonding the tape to the two surfaces of the article. Moreover, the tape is pressed against the article by the pressing part. The tape is thus thoroughly bonded to the article by the pressing part, thereby improving the tape wetting area. In addition, the pressing of the tape against the article by the pressing part prevents air from penetrating between the article and the tape. Accordingly, it is possible to suppress the production of air bubbles by swelling air, thereby allowing for an article of good appearance and enabling the various problems caused by the production of air bubbles to be avoided.

A bonding method in a bonding apparatus according to an embodiment of the present invention includes: a step of dispensing tape from a dispenser part; a step of causing an article including two opposing surfaces and the dispenser part to engage in relative motion with the tape in contact with the article, thereby bonding the tape to the two surfaces of the article; and a step of pressing the tape against the article.

In accordance with this embodiment, tape is dispensed by the dispenser part and contacts the article, in which state the article and the dispenser part engage in relative motion, thereby bonding the tape to the two surfaces of the article. Moreover, the pressing of the tape against the article allows the tape to be thoroughly bonded to the article, thereby increasing the tape wetting area. In addition, the pressing of the tape against the article prevents air from penetrating between the tape and the article, thereby suppressing the production of air bubbles by swelling air. Accordingly, it is possible to improve the appearance of the article and avoid the occurrence of various problems caused by the production of air bubbles.

In accordance with one aspect of the present invention, it is possible to provide a bonding apparatus, article, and bonding method allowing for increased tape wetting area.

### BRIEF DESCRIPTION OF THE DRAWINGS

FIG. 1 is a perspective view illustrating a bonding apparatus according to an embodiment of the present invention.
FIG. 2 is a perspective view illustrating an inner panel, a dispensing device, a hot air blower device, and a pressing device.
FIG. 3 is a magnified perspective view illustrating the vicinity of a guide part of a dispensing device.
FIG. 4 is a magnified perspective view illustrating an inner panel, a dispensing device, a hot air blower device, and a pressing device.
FIG. 5 is a perspective view illustrating tape being pressed against an outer edge portion of an inner panel while the tape is being heated.
FIG. 6 is a cross-sectional view illustrating a door part in an assembled state.
FIG. 7(a) is a cross-sectional view illustrating a door part assembled according to the bonding method of the present embodiment, and FIG. 7(b) is a cross-sectional view illustrating a door part assembled according to a conventional bonding method.

### EXEMPLARY MODES FOR CARRYING OUT THE INVENTION

An embodiment of the present invention will now be described with reference to the drawings.

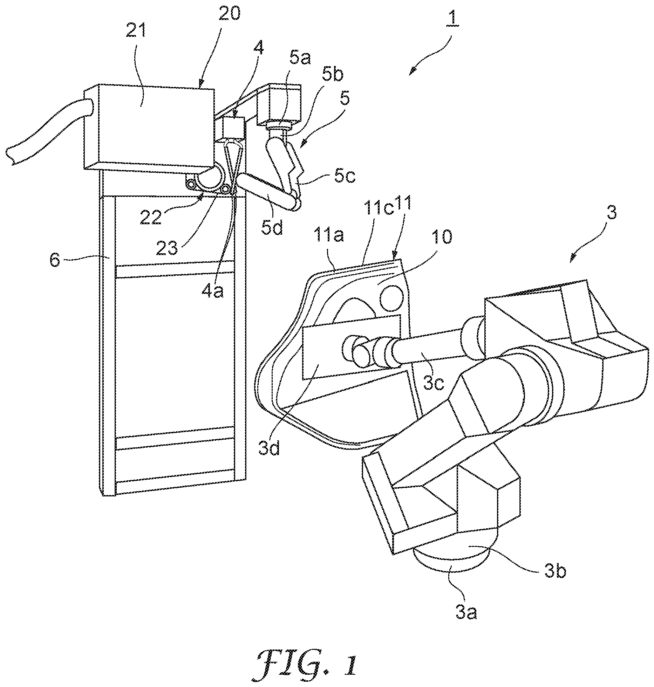

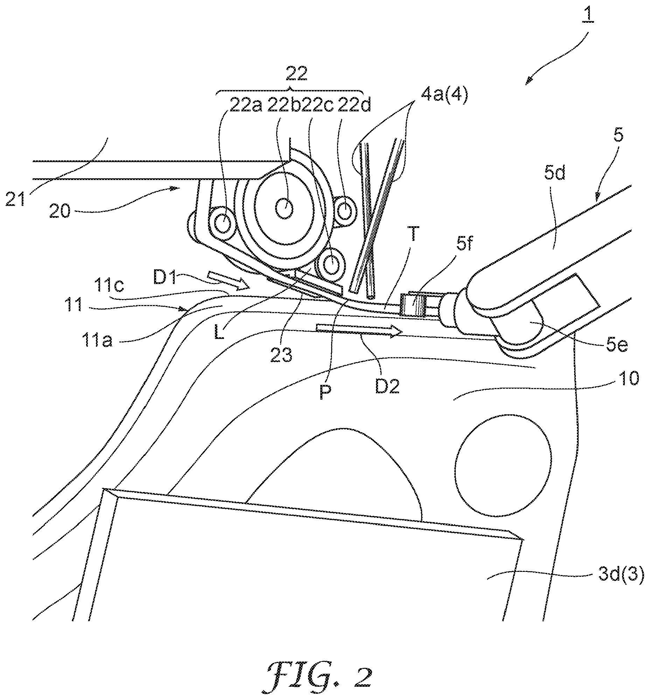

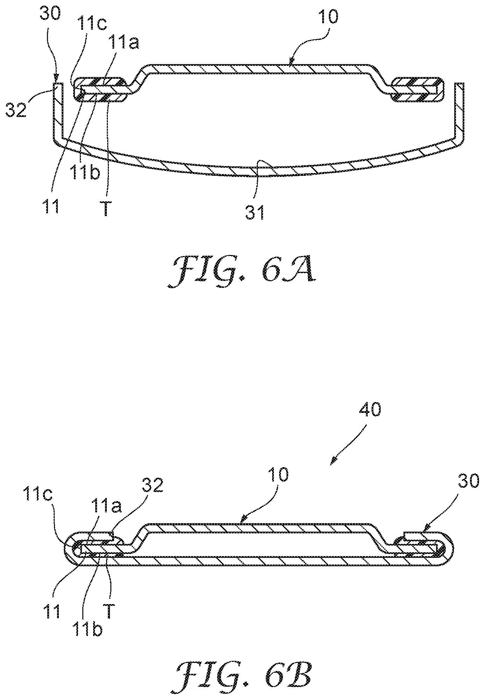

FIGS. 1 and 2 are perspective views illustrating a bonding apparatus 1 according to the present embodiment. The bonding apparatus 1 is an apparatus for bonding a tape T to an outer edge portion 11 of an inner panel (article) 10 forming part of a door part for an automobile. The outer edge portion 11 of the inner panel 10 includes an edge 11c of the inner panel 10 and a front surface 11a and a rear surface 11b (see FIG. 6) of the inner panel 10 that extend a fixed distance from the edge 11c of the inner panel 10 toward the inside of the inner panel 10. The front surface 11a and rear surface 11b correspond to two opposing surfaces of the inner panel 10. As used herein, "two opposing surfaces" is a concept that refers not only to two flat surfaces which are mutually parallel, but also encompasses two flat surfaces that are slanted with respect to one another, two opposing curved surfaces, and the like

The tape T is bonded to the outer edge portion 11 of the inner panel 10, after which the inner panel 10 is joined to an outer panel via hemming, and the door part is manufactured via this joining of the inner panel 10 to the outer panel. The front surface 11a of the outer edge portion 11 is a surface that is exposed to the exterior when the inner panel 10 is joined to the outer panel, and the rear surface 11b of the outer edge portion 11 is a surface that is concealed by the outer panel when the inner panel 10 is joined to the outer panel.

The tape T bonded to the outer edge portion 11 is constituted, for example, by a structural adhesive film containing a thermoset resin (preferably a structural adhesive film containing a thermoset resin and a foaming agent), and is constituted by a material that softens at a predetermined temperature (for example, 60°C to 100°C) or higher. An example of the material of the tape T is an epoxy compound. The tape T is a swelling foam tape that foams and swells when heated, and is sandwiched between the outer edge portion 11 of the inner panel 10 and the outer panel. The tape T serves to bond the inner panel 10 to the outer panel, to fill in the gap between the inner panel 10 and the outer panel, and to prevent rust.

The curing temperature of the tape T is typically 60°C to 200°C, and is, for example, 100°C to 150°C. The curing time of the tape T is typically 5 minutes to 60 minutes, and is, for example, 10 minutes to 30 minutes. The thickness of the tape T is typically 0.2 mm to 0.8 mm, and may be, for example, 0.4 mm. In the present embodiment, the tape T is in the form of a roll; however, the tape is not limited to being in a roll, and may be, for example, in the form of a strip. The tape T is peeled from a liner L for use, and examples of the material used for the liner L include polyethylene, polyethylene terephthalate (PET), or paper (30 µm to 200 µm thick).

The bonding apparatus 1 is provided with a dispensing device (dispenser part) 20 for dispensing the tape T, a supporting device (supporting part) 3 for supporting the inner panel 10, a heat-providing device (heat-providing part) 4 for blowing hot air on the tape T dispensed from the dispensing device 20, and a pressing device 5 for pressing the tape T dispensed from the dispensing device 20 against the outer edge portion 11 of the inner panel 10.

The dispensing device 20, heat-providing device 4, and pressing device 5 are supported above a stand 6. The heat-providing device 4 is disposed to a side of the dispensing device 20 in a direction D1 in the which tape T is dispensed, and the pressing device 5 is disposed further along the dispensing direction D1 to the side of the heat-providing device 4. The dispensing direction D1 is a direction extending diagonally downward from the lower part of the dispensing device 20.

The dispensing direction D1 can be altered by the dispensing device 20; for example, the angle of the dispensing direction D1 with respect to a horizontal surface can be reduced in order to facilitate the bonding of the tape T to the outer edge portion 11 of the inner panel 10. The angle formed by the dispensing direction D1 and a conveying direction D2 to be described hereafter is at least 0° and not more than 20°, and is preferably 10°.

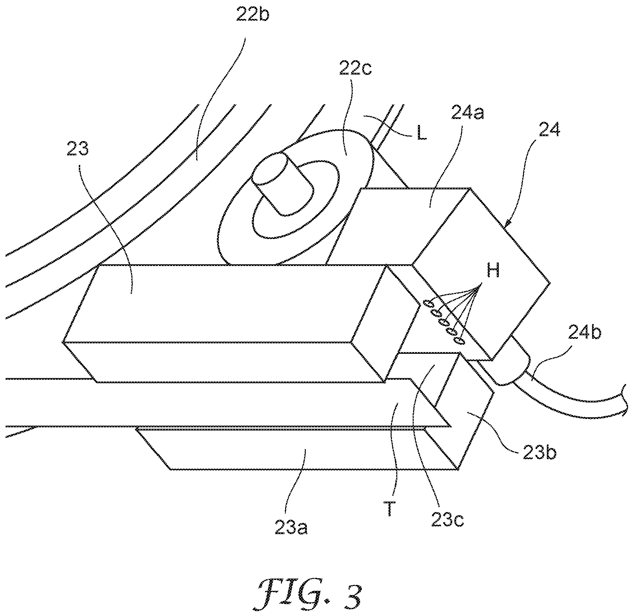

As illustrated in FIGS. 2 and 3, the dispensing device 20 is provided with a holding part 21 for holding the tape T within its interior, a roller group 22 for guiding the tape T dispensed from the holding part 21, a guide part 23 for guiding the tape T directly along the dispensing direction D1, and an air blower device 24 for blowing air on the tape T.

The holding part 21 of the dispensing device 20 has, for example, a box-like shape, and the tape T is held within the interior of the holding part 21 prior to being dispensed. The tape T is preferably kept at a temperature of at least 10°C and no more than 25°C within the interior of the holding part 21.

The roller group 22 of the dispensing device 20 is capable of controlling the dispensing of the tape T according to the shape and length of the outer edge portion 11 of the inner panel 10 to which the tape T is to be bonded. The roller group 22 is made up of a guide roller 22a provided below the holding part 21, a main roller 22b provided to the dispensing direction D1 side of the guide roller 22a, a guide roller 22c provided further to the dispensing direction D1 side of the main roller 22b, and a guide roller 22d positioned above the guide roller 22c.

The guide roller 22a serves to control the dispensing direction D1 of the tape T, and the main roller 22b serves to control the length of tape T that is dispensed (i.e., the dispensing speed of the tape T). Once passing the guide roller 22a, the tape T is dispensed in the dispensing direction D1 and enters the guide part 23, where the liner L is peeled off. The removed liner L is wound diagonally upward from the guide part 23, passes between the guide roller 22c and the main roller 22b, and between the guide roller 22d and the main roller 22b, and is further wound upward. Using an air cylinder or the like, the guide roller 22d presses the liner L against the main roller 22b, in which state the main roller 22b is driven to wind the liner L further upward.

The positions and arrangement state of the plurality of rollers making up the roller group 22 can be altered, allowing for the alteration of the dispensing direction D1. It is also acceptable to use a single roller in place of the roller group 22.

The guide part 23 of the dispensing device 20 is disposed from below the roller group 22 along the dispensing direction D1. The guide part 23 guides the tape T dispensed along the dispensing direction D1 toward the outer edge portion 11 of the inner panel 10, which is disposed along an extension of the dispensing direction D1. The guide part 23 has, for example, a prism shape (with either a triangular prism or a quadrangular prism being acceptable) including a bottom surface 23a and side surfaces 23b, and a groove 23c is formed around the center of the side surfaces 23b.

The tape T being dispensed along the dispensing direction D1 is guided by the groove 23c of the guide part 23, and the liner L is peeled off within the groove 23c. The liner L is folded back 180° in the opposite direction at the tip end of the groove 23c (inner panel 10), and, after having been folded back in this manner, is rolled up between the guide roller 22c and the main roller 22b.

The air blower device 24 is provided with an air-providing part 24a for providing air to the tape T, and a tube 24b for providing air to the air-providing part 24a. The air-providing part 24a has, for example, a substantially cuboidal shape, and is anchored above the tip end of the guide part 23. Five air-providing holes H, for example, are provided in a row along the widthwise direction of the groove 23c on the lower surface of the air-providing part 24a. The air-providing holes H are provided so as to face the tape T guided into the groove 23c of the guide part 23. Air is supplied from the air-providing holes H toward the location where the liner L is peeled off. Supplying air to the location where the liner L is peeled off in this way prevents the tape T from becoming entangled in the liner L.

As illustrated in FIGS. 1 and 2, the supporting device 3 is, for example, a robot arm that is disposed at a position located a predetermined distance from the dispensing device 20, the heat-providing device 4, and the pressing device 5. The supporting device 3 is provided with a base section 3a that is rested upon a floor or the like (or, in some cases, suspended from the ceiling) in a factory or the like, a leg section 3b that is supported so as to be capable of horizontally swiveling with respect to the base section 3b, an arm section 3c that is capable of swinging upward and downward with respect to the leg section 3b and extending and retracting, and a part-supporting section 3d that is rotatably mounted to the end of the arm section 3c and supports the inner panel 10. The supporting device 3 is capable of controlling the horizontal swiveling of the leg section 3b, the vertical swinging and extension/retraction of the arm section 3c, and the rotation of the inner panel 10 by the part-supporting section 3d. The supporting device 3 is capable of moving the inner panel 10 in three dimensions according to the shape and length of the outer edge portion 11 of the inner panel 10.

The inner panel 10 is moved to a position below the dispensing device 20, the heat-providing device 4, and the pressing device 5 while being supported on the part-supporting section 3d. During this process, the supporting device 3 supports the inner panel 10 so that the outer edge portion 11 is positioned at the dispensing direction D1 side of the guide part 23 of the dispensing device 20 (i.e., to the downstream side of the guide part 23 with respect to the dispensing direction D1). The supporting device 3 also causes the tape T dispensed in the dispensing direction D1 from the guide part 23 to rest upon the edge 11c of the outer edge portion 11.

The supporting device 3 bonds the tape T to the outer portion 11 of the inner panel 10 by horizontally moving and rotating the inner panel 10 at the dispensing direction D1 side of the guide part 23 of the dispensing device 20. Specifically, the supporting device 3 horizontally moves and rotates the inner panel 10 so that a bonding position P for the tape T constituted by the edge 11c of the outer edge portion 11 and the guide part 23 have identical positional relationships.

The relative positions of the dispensing device 20, the inner panel 10, the heat-providing device 4, and the pressing device 5 are maintained by the supporting device 3. The supporting device 3 progressively bonds the tape T to the outer edge portion 11 by moving the inner panel 10 in a conveying direction D2, which is the direction along which the outer edge portion 11 lies, with the tape T resting upon the bonding position P on the outer edge portion 11.

The heat-providing device 4 is constituted, for example, by two heater pipes 4a. The heat-providing device 4 is disposed to the conveying direction D2 side of the dispensing device 20, and is anchored so that the upper portion of the heat-providing device 4 is immobile. The heater pipes 4a extend diagonally downward from the upper part of the heat-providing device 4. The heater pipes 4a are capable of blowing hot air from openings positioned diagonally below the heater pipes 4a. In addition, of the two heater pipes 4a, the position of the heater pipe 4a that is closer to the dispensing device 20 is fixed, but the position of the heater pipe 4a that is further away from the dispensing device 20 is variable, allowing this heater pipe 4a to be moved as appropriate. By allowing the position of one of the heater pipes 4a to be variable in this way allows the heater pipe 4a to follow the position of the tape T as it is progressively bonded to the inner panel 10.

The heat-providing device 4 may have one heater pipe 4a or three or more heater pipes 4a. The positions of the heater pipes 4a may be fixed or variable. Furthermore, a heat-providing device 4 utilizing features other than the heater pipes 4a described above may also be used; for example, a near-infrared lamp or the like may be used as the heat-providing device 4.

The openings of the heater pipes 4a of the heat-providing device 4 face toward the bonding position P of the tape T on the outer edge portion 11 of the inner panel 10 supported by the supporting device 3, or slightly to the side of the bonding position P in the conveying direction D2. The hot air blown from the heater pipes 4a strikes the tape T resting immediately following on the edge 11c of the outer edge portion 11. The hot air being blown by the heat-providing device 4 on the tape T resting immediately following on the edge 11c causes the tape T to soften and droop immediately after being laid upon the edge 11c, thereby temporarily bonding the tape T to the outer portion 11. In this way, the heat-providing device 4 serves to deform the tape T and causes it to droop onto the outer edge portion 11, thereby temporarily bonding the tape T to the front surface 11a and rear surface 11b of the inner panel 10.

The pressing device 5 is, for example, a robot arm smaller than that of the supporting device 3, and is anchored at the upper side of the stand 6 so as to be immobile. As illustrated in FIGS. 1, 2, and 4, the pressing device 5 is provided with a base section 5a anchored above the stand 6, a first rotating part 5b supported so as to be horizontally rotatable with respect to the base section 5a, a first arm 5c swingably mounted upon the first rotating part 5b, a second arm 5d swingably mounted to the first arm 5c, a second rotating part 5e rotatably supported at the end of the second arm 5d, a roller (pressing part) 5f mounted on the end of the second rotating part 5e, and a spring (pressure-controlling part) 5g mounted on the second rotating part 5e end of the roller 5f. The second rotating part 5e, roller 5f, and spring 5g are not shown in FIG. 1.

The pressing device 5 is disposed so that the first arm 5c, second arm 5d, the second rotating part 5e, the roller 5f, and the spring 5g hang down from the base section 5a and the first rotating part 5b. The pressing device 5 is capable of controlling the rotation of the first and second rotating parts 5b, 5e and the swinging of the first and second arms 5c, 5d. This control performed by the pressing device 5 allows the position of the roller 5f to be controlled, thereby allowing the roller 5f to be moved in three dimensions according to the shape and length of the outer edge portion 11 of the inner panel 10.

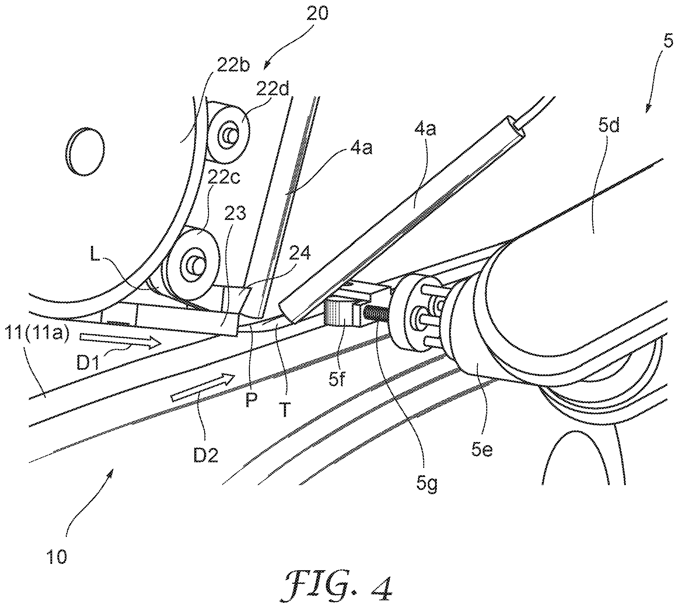

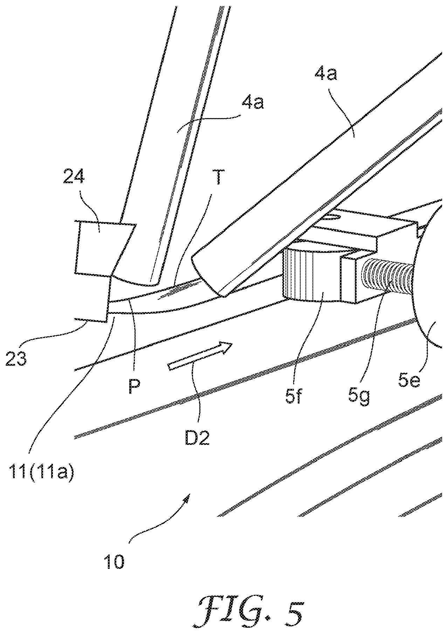

As illustrated in FIGS. 4 and 5, the roller 5f of the pressing device 5 is disposed further along the conveying direction D2 than the heater pipes 4a of the heat-providing device 4, and presses the tape T that has been temporarily bonded by the hot air from the heater pipes 4a to the front surface 11a of the outer edge portion 11. The roller 5f is provided at a position near the heat-providing device 4. Specifically, the roller 5f is disposed at a position at which the tape T and the front surface 11a first come into contact as the result of the tape T sagging due to the heat from the hot air supplied by the heat-providing device 4.

As discussed above, the roller 5f of the pressing device 5 is a small roller for pressing the tape T against the front surface 11a of the outer edge portion 11 after the tape T has been heated by heat supplied from the heat-providing device 4. The surface of the roller 5f that presses the tape T is, for example, flat (or, alternatively, a curved surface such as an arc). Examples of the material used for the roller 5f include non-tacky materials such as silicone sponge rubber or polytetrafluoroethylene (PTFE), or metal for which the surface has been subjected to an anti-tack treatment. The direction in which the roller 5f rotates is slanted with respect to the conveying direction D2 of the inner panel 10 so that the upstream side of the conveying direction D2 faces upward. The angle of inclination of the direction of rotation of the roller 5f with respect to the conveying direction D2 is preferably at least 0° and no more than 5°, and is more preferably at least 2° and no more than 4°.

The spring 5g of the pressing device 5 serves to detect the pressing force of the roller 5f upon the tape T and to control said pressing force. The pressure with which the roller 5f presses the tape T is set according to various conditions such as the softness of the material used for the tape T, and the thickness and temperature of the tape T. The pressure with which the roller 5f presses the tape T is preferably a slight pressure. Here, "slight pressure" is a level of pressure such that the position of the tape T with respect to the article is maintained when the tape T is brought into contact with the front surface 11a of the outer edge portion 11 and pressed while not damaging the article, and is preferably a level of pressure such that scratches or other defects in appearance are not made in the plasticized tape T. This slight pressure is preferably at least 50 g and not more than 1 kg.

An element other than a spring 5g may also be used for the pressure-controlling part of the pressing device 5. Various means can be used for the pressure-controlling part, such as an air-operated air cylinder, or an electrical means such as an electrically-operated electric cylinder.

Next, a method for bonding the tape T using the bonding apparatus 1 and a method for assembling the door part 40 from the inner panel 10 will be described. First, as illustrated in FIG. 1, the inner panel 10 is supported by the supporting device 3, and the inner panel 10 is moved so that the outer edge portion 11 is positioned to the dispensing direction D1 side of the guide part 23 of the dispensing device 20. The tape T is then dispensed from the guide part 23 and laid upon the bonding position P on the outer edge portion 11. In this state, the inner panel 10 is moved in the conveying direction D2, and hot air is blown at the bonding position P from the heater pipes 4a of the heat-providing device 4. Then, as illustrated in FIG. 2, the tape T sags while engaging in relative motion in the conveying direction D2 over the outer edge portion 11, thereby becoming temporarily bonded to the front surface 11a of the outer portion 11. Having been made to droop and become temporarily bonded in this way, the tape T is pressed against the front surface 11a by the roller 5f of the pressing device 5.

Moving the inner panel 10 in the conveying direction D2 with the tape T resting upon the bonding position P on the outer edge portion 11 as described above causes the tape T to become successively bonded to the outer edge portion 11 so as to cover the same, and the tape T is made to droop and be temporarily bonded to the front surface 11a and rear surface 11b of the outer edge portion 11 by the hot air from the heat-providing device 4. The tape T is then pressed against the front surface 11a by the roller 5f of the pressing device 5, thereby uniformly bonding the tape T to the outer edge portion 11 of the inner panel 10.

As illustrated in FIG. 6(a), after the tape T has been bonded to the outer edge portion 11 of the inner panel 10, the inner panel 10 is fitted against a bottom surface 31 of an outer panel 30, ends 32 of which are bent at roughly right angles. Then, as illustrated in FIG. 6(b), hemming is performed to bend the ends 32 of the outer panel 30 inward so as to sandwich the outer edge portion 11 of the inner panel 10. At this time, the tape T bonded to the front surface 11a and rear surface 11b of the outer edge portion 11 extends throughout the entirety of the gap formed between the inner panel 10 and the outer panel 30, and may extend outside the bent ends 32 of the outer panel 30. Having the tape T extend outside the ends 32 of the outer panel 30 yields rust-preventing effects near the ends 32 of the outer panel 30. The joining of the inner panel 10 and the outer panel 30 as described above completes the door part 40.

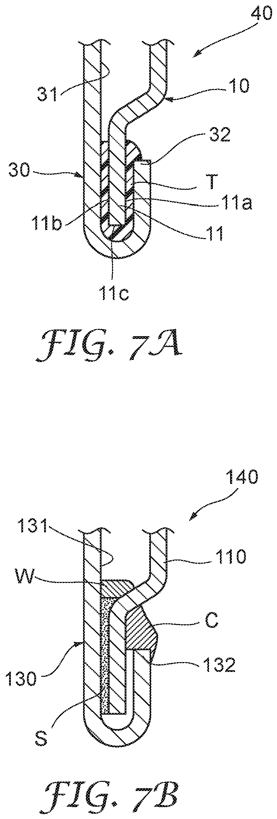

In a conventional method for assembling a door part 140, as illustrated in FIG. 7(b), hemming is performed after an adhesive S has first been applied to a bottom surface 131 of an outer panel 130 and an inner panel 110 has been fitted to the bottom surface 131 of the outer panel 130. The adhesive S is then heat-cured (baked). It is then necessary to mount the door part 140 to the vehicle body, perform electropainting, bake and dry the electropainted coating, apply a sealer C to the exterior of the ends 132 of the outer panel 130 to prevent rust, and then perform painting, baking, and drying and apply an anti-rust wax W all in that order, leading to the problem of an extremely complicated process. The sealer C may be pre-fired before painting after the door part 140 is mounted to the vehicle body, or before mounting the door part 140 to the vehicle body.

By contrast, in the method for assembling the door part 40 according to the present embodiment, as illustrated in FIG. 7(a), the tape T is first bonded to the outer edge portion 11 of the inner panel 10, after which hemming is performed to join the inner panel 10 and the outer panel 30. If a structural adhesive film containing a foaming agent is used for the tape T, anti-rust performance can be imparted by the structural adhesive film. Accordingly, it is possible to streamline the process in the present embodiment by bonding the tape T to the outer edge portion 11 of the inner panel 10. In order to partially improve anti-rust performance, a sealer C may be applied to that portion and pre-fired, followed by applying anti-rust wax W.

In accordance with the bonding apparatus 1 and bonding method of the present embodiment as described above, the tape T dispensed by the dispensing device 20 comes into contact with the inner panel 10, in which state the inner panel 10 is moved relative to the dispensing device 20, thereby bonding the tape T to the front surface 11a and the rear surface 11b of the inner panel 10. Moreover, the tape T is pressed against the inner panel 10 by the roller 5f. Accordingly, the tape T can thus be bonded to the inner panel 10 by the roller 5f, thereby allowing for increased wetting area on the part of the tape T. In addition, the pressing of the tape T against the inner panel 10 by the roller 5f prevents air from penetrating between the tape T and the inner panel 10, thereby allowing the production of air bubbles by swelling air to be suppressed. Accordingly, it is possible to improve the appearance of the inner panel 10 and avoid the occurrence of various problems caused by the production of air bubbles.

The roller 5f is provided at a position near the heat-providing device 4 on a side of the heat-providing device 4 opposite that facing the dispensing device 20. Specifically, the roller 5f is provided at a location where the tape T gradually droops due to the heat from the heat-providing device 4 and first faces the front surface 11a of the inner panel 10. Disposing the roller 5f at this position causes the tape to be pressed against the inner panel 10 while in a warm and soft state, allowing the tape T to be more reliably bonded to the inner panel 10. This allows the wetting area of the tape T to be increased.

The direction in which the roller 5f rotates is slanted with respect to the conveying direction D2, which is the direction in which the inner panel 10 is moved by the supporting device 3, so that the upstream side of the conveying direction D2 (i.e., the side towards the dispensing device 20) faces upward. Specifically, the roller 5f is slanted with respect to the conveying direction D2 so that force acts upon the tape T toward the inside of the inner panel 10 (in the present embodiment, downward). Accordingly, due to the roller 5f, a force pulling the tape T toward the inside of the inner panel 10 acts thereupon on the downstream side in the conveying direction D2, thereby allowing the trapping of air between the outer edge of the inner panel 10 and the tape T to be prevented. This allows for the more reliable prevention of the production of air bubbles by swelling air.

The apparatus is also provided with the spring 5g, which controls the pressure with which the roller 5f presses the tape T against the inner panel 10. Therefore, controlling pressure using the spring 5g allows the roller 5f to press the tape T against the inner panel 10 with the desired level of pressure. It is thus possible to avoid situations in which the Tape T becomes deformed due to being strongly pressed, such as wrinkles forming in the tape T, or the tape T tearing or breaking. In other words, the tape T is pressed against the inner panel 10 so as to be kept in a flat state without any deformation occurring therein, thereby allowing various problems caused by deformation of the tape T to be avoided.

The roller 5f is the feature used to press the tape T against the inner panel 10. Thus, rolling the roller 5f over the tape T allows the tape T to be smoothly and uniformly pressed against the inner panel 10, and enables the entirety of the tape T to be bonded to the inner panel 10. This allows the wetting area of the tape T to be further increased. Rolling the roller 5f over the tape T to press the tape T against the panel 10 also allows damage to the tape T to be prevented.

For example, although the inner panel 10 is moved by the supporting device 3 in the embodiment described above in order to bond the tape T, it is also possible to bond the tape by securing the position of the inner panel and moving the dispensing device with respect to the inner panel. In other words, any arrangement is acceptable as long as the tape T is bonded to the inner panel 10 by the relative movement of the inner panel 10 and the dispensing device 20.

While the pressing device 5 provided with the roller 5f is fixed above the stand 6 in the embodiment described above, the position of the pressing device 5 is not limited to being above the stand 6, and can be altered as appropriate. For example, the pressing device 5 may be rested upon a factory floor or the like.

While in the embodiment described above, the tape T is bonded to the front surface 11a, from which the tape T is visible after assembly, the tape T may also be bonded to both the front surface 11a and the rear surface 11b of the outer edge portion 11.

While a roller 5f was used as the pressing part for pressing the tape T against the inner panel 10 in the embodiment described above, it is also possible to use an element other than a roller 5f as the pressing part, such as a squeegee or other plate-shaped member, or a member that clamps the tape T from both sides. In order to use a plate-shaped member such as a squeegee in order to create a force pressing the tape T against the inside of the inner panel 10, the squeegee or the like must be slanted so that the upstream side thereof with respect to the conveying direction D2 faces downward. Alternatively, for example, air may be blown in order to press the tape T against the inner panel 10.

While the roller 5f is provided at a position near the heat-providing device 4 in the embodiment described above, the position of the roller 5f and the force with which the roller 5f presses the tape T may be altered as appropriate. For example, the roller 5f may be such that it presses the tape T in a single pass after the tape T has been completely bonded to the outer edge portion 11.

While an inner panel 10 which constitutes a part of the door part 40 is the object to which the tape T is bonded in the embodiment described above, the tape T can be bonded to various objects. For example, the tape T may be bonded to various other automobile parts apart from doors such as hoods or trunks, to external parts for aircraft the like, or to finished articles such as industrially manufactured articles.

## Claims

1. A bonding apparatus provided with:
a dispenser part for dispensing tape;
a supporting part that supports an article comprising two opposing surfaces with the tape dispensed by the dispenser part in contact with the article, and bonds the tape to the two surfaces of the article by causing the article and the dispenser part to engage in relative motion;
a heat-providing part that provides heat to the tape contacting the article; and
a pressing part that presses the tape against the article,
wherein the pressing part (a) is further provided with a pressure-controlling part that controls the pressure with which the pressing part presses the tape against the article, (b) is a roller that presses the tape against the article, or (c) both (a) and (b).

2. The bonding apparatus according to claim 1, wherein the pressing part is provided at a position near the heat-providing part on a side of the heat-providing part opposite the dispenser part.

3. The bonding apparatus according to claim 1 or 2, wherein the pressing part is slanted with respect to the direction that the article moves with respect to the dispenser part so that force acts upon the tape toward the interior of the article.

4. A bonding method comprising in a bonding apparatus according to claim 1:
a step of dispensing tape from a dispenser part;
a step of causing an article comprising two opposing surfaces and the dispenser part to engage in relative motion with the tape in contact with the article, thereby bonding the tape to the two surfaces of the article; and
a step of pressing the tape against the article using a pressing part,
wherein the pressing part (a) is further provided with a pressure-controlling part that controls the pressure with which the pressing part presses the tape against the article, (b) is a roller that presses the tape against the article, or (c) both (a) and (b).

5. The bonding method of claim 4, further comprising:
providing heat to the tape contacting the article, before the step of pressing the tape against the article.

6. The bonding method of claim 5 using the bonding apparatus according to any one of claims 2 to 3.

## Patentansprüche

1. Verbindungsvorrichtung, bereitgestellt mit:
einem Abgabeelement zum Abgeben von Band;
einem Stützelement, das einen Gegenstand, der zwei gegenüberliegende Oberflächen umfasst, mit dem Band stützt, das von dem Abgabeelement in Kontakt mit dem Gegenstand ausgegeben wird, und das Band mit den zwei Oberflächen des Gegenstands verbindet, indem bewirkt wird, dass der Gegenstand und das Abgabeelement in relativer Bewegung ineinander greifen;
einem wärmebereitstellenden Element, das dem Band in Kontakt mit dem Gegenstand Wärme bereitstellt; und
einem Presselement, das das Band gegen den Gegenstand drückt,
wobei das Presselement (a) ferner mit einem drucksteuernden Element bereitgestellt ist, das den Druck steuert, mit dem das Presselement das Band gegen den Gegenstand drückt, (b) eine Walze ist, die das Band gegen den Gegenstand drückt, oder (c) sowohl (a) als auch (b) ist.

2. Verbindungsvorrichtung nach Anspruch 1, wobei das Presselement an einer Position nahe dem wärmebereitstellenden Element auf einer dem Abgabeelement gegenüberliegenden Seite des wärmebereitstellenden Elements bereitgestellt ist.

3. Verbindungsvorrichtung nach Anspruch 1 oder 2, wobei das Presselement in Bezug auf die Richtung geneigt ist, in der sich der Gegenstand in Bezug auf das Ausgabeelement bewegt, so dass eine Kraft auf das Band in Richtung des Inneren des Gegenstands wirkt.

4. Verbindungsverfahren, umfassend in einer Verbindungsvorrichtung nach Anspruch 1:
einen Schritt des Abgebens von Band aus einem Ausgabeelement;
einen Schritt des Bewirkens, dass ein Gegenstand, der zwei gegenüberliegende Oberflächen umfasst, und das Abgabeelement in einer relativen Bewegung mit dem Band in Kontakt mit dem Gegenstand ineinander greifen, wodurch das Band an die zwei Oberflächen des Gegenstands gebunden wird; und
einen Schritt des Pressens des Bandes gegen den Gegenstand unter Verwendung eines Presselements,
wobei das Presselement (a) ferner mit einem drucksteuernden Element bereitgestellt ist, das den Druck steuert, mit dem das Presselement das Band gegen den Gegenstand drückt, (b) eine Walze ist, die das Band gegen den Gegenstand drückt, oder (c) sowohl (a) als auch (b) ist.

5. Verbindungsverfahren nach Anspruch 4, ferner umfassend:
Bereitstellen von Wärme an das Band, das in Kontakt mit dem Gegenstand ist, vor dem Schritt des Pressens des Bandes gegen den Gegenstand.

6. Verbindungsverfahren nach Anspruch 5 unter Verwendung der Verbindungsvorrichtung nach einem der Ansprüche 2 bis 3.

## Revendications

1. Appareil de liaison pourvu de :
une partie de distribution pour distribuer un ruban ;
une partie de support qui supporte un article comprenant deux surfaces opposées avec le ruban distribué par la partie de distribution en contact avec l'article, et lie le ruban aux deux surfaces de l'article en amenant l'article et la partie de distribution à venir en prise dans un mouvement relatif ;
une partie de fourniture de chaleur qui fournit de la chaleur au ruban en contact avec l'article ; et
une partie de pression qui presse le ruban contre l'article,
dans lequel la partie de pression (a) comporte en outre une partie de commande de pression qui commande la pression avec laquelle la partie de pression presse le ruban contre l'article, (b) est un rouleau qui presse le ruban contre l'article, ou (c) à la fois (a) et (b).

2. Appareil de liaison selon la revendication 1, dans lequel la partie de pression est fournie à une position près de la partie de fourniture de chaleur sur un côté de la partie de fourniture de chaleur opposé à la partie de distribution.

3. Appareil de liaison selon la revendication 1 ou 2, dans lequel la partie de pression est penchée par rapport à la direction dans laquelle l'article se déplace par rapport à la partie de distribution de sorte qu'une force agit sur le ruban en direction de l'intérieur de l'article.

4. Procédé de liaison comprenant, dans un appareil de liaison selon la revendication 1 :
une étape de distribution d'un ruban à partir d'une partie de distribution ;
une étape consistant à amener un article comprenant deux surfaces opposées et la partie de distribution à venir en prise avec dans un mouvement relatif avec le ruban en contact avec l'article, en liant de ce fait le ruban aux deux surfaces de l'article ; et
une étape consistant à presser le ruban contre l'article en utilisant une partie de pression,
dans lequel la partie de pression (a) comporte en outre une partie de commande de pression qui commande la pression avec laquelle la partie de pression presse le ruban contre l'article, (b) est un rouleau qui presse le ruban contre l'article, ou (c) à la fois (a) et (b).

5. Procédé de liaison selon la revendication 4, comprenant en outre :
la fourniture de chaleur au ruban en contact avec l'article, avant l'étape consistant à presser le ruban contre l'article.

6. Procédé de liaison selon la revendication 5, en utilisant l'appareil de liaison selon l'une quelconque des revendications 2 à 3.
